# EUROPÄISCHE PATENTSCHRIFT

(11) **EP 3 290 839 B1**
(45) Veröffentlichungstag und Bekanntmachung des Hinweises auf die Patenterteilung: **13.04.2022**
(21) Anmeldenummer: 17188063.6
(22) Anmeldetag: 28.08.2017
(51) Int. Cl.: F25D 23/00, F25B 39/04

(54) **KÜHL- UND/ODER GEFRIERGERÄT**
REFRIGERATION AND/OR FREEZER DEVICE
APPAREIL DE RÉFRIGÉRATION ET/OU DE CONGÉLATION

(30) Priorität: 29.08.2016 DE 102016010444
(43) Veröffentlichungstag der Anmeldung: 07.03.2018
(73) Patentinhaber: Liebherr-Hausgeräte Ochsenhausen GmbH, 88416 Ochsenhausen (DE)
(72) Erfinder: Oelmaier, Klaus, 88416 Ochsenhausen (DE); Thalmann, Alexander, 9640 Kötschach (AT); Belchilov, Hristo, 4016 Plovdiv (BG); Straub, Mario, 88450 Berkheim (DE)
(74) Vertreter: Herrmann, Uwe

(56) Entgegenhaltungen:
- EP-A2- 0 719 995
- CN-A- 1 727 822
- CN-U- 204 535 240
- JP-A- 2009 085 455
- JP-A- 2014 059 109
- US-A- 4 089 187
- US-A1- 2001 054 293
- US-A1- 2009 241 567

## Beschreibung

Die vorliegende Erfindung betrifft eine Anordnung umfassend ein als Einbaugerät ausgestelltes Kühl- und/oder Gefriergerät sowie einen Möbelumbau, in dem das Gerät angeordnet ist, wobei das Kühl- und/oder Gefriergerät wenigstens einen Korpus und wenigstens einen von dem Korpus umgebenen gekühlten Innenraum umfasst, wobei das Gerät zumindest einen Kältemittelkreislauf aufweist, der wenigstens einen Verflüssiger umfasst, der sich an der Rückseite des Korpus in einem Luftkanal zwischen der Geräterückseite und dem Möbelumbau befindet, und wobei das Gerät wenigstens einen Ventilator aufweist, der so angeordnet ist, dass er im Betrieb eine Luftströmung über den Verflüssiger erzeugt.

Aus dem Stand ist es bekannt, den Verflüssiger eines Kältemittelkreislaufes beispielsweise im Bereich der Rückseite des Gerätekorpus anzuordnen und mittels eines Ventilators eine Luftströmung über den Verflüssiger zu erzeugen. Exemplarisch wird auf die DE 20 2005 059 490 A1 verwiesen.

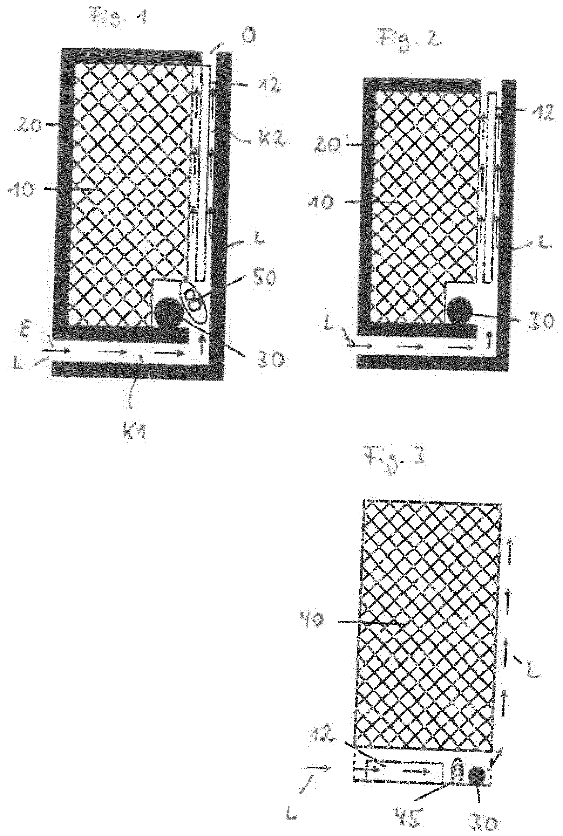

Des Weiteren sind aus dem Stand der Technik Geräte bekannt, bei denen die Belüftung des Verflüssigers ausschließlich durch natürliche Konvektion erfolgt. Ein solches Gerät ist in Figur 2 dargestellt. Bei diesem Gerät handelt es sich um ein Einbaugerät 10, das in einem Möbelumbau angeordnet ist, der mit dem Bezugszeichen 20 gekennzeichnet ist. Im rückseitigen Bereich des Gerätes 10 befindet sich der Verflüssiger 12 in einem Luftkanal zwischen der Geräterückseite und dem Möbelumbau 20. Das Bezugszeichen 30 kennzeichnet den Verdichter des Kältemittelkreislaufes. Dieser ist unterhalb des Verflüssigers 12 in der Kompressornische untergebracht.

Wie dies durch die Pfeile gekennzeichnet ist, tritt die Luft L vorne unter dem Gerät in den Möbelumbau 20 ein und steigt dann im Bereich der Kompressornische nach oben. Die Luft nimmt Wärme von der Hochdruckseite des Kältemittelkreislaufes auf, wobei die Hochdruckseite den Verdichter, den Verflüssiger und die Druckleitung zwischen Verdichter 30 und Verflüssiger 12 umfasst. Wie dies aus Figur 2 hervorgeht, strömt die Luft dabei in einem Kanal zwischen der Geräterückwand und der Möbelrückwand bzw. einer Gebäudewand, vor der das Gerät steht, nach oben. Diese Luftbewegung erfolgt ausschließlich aufgrund natürlicher Konvektion.

Figur 3 zeigt ein aus dem Stand der Technik bekanntes Beispiel für ein Standgerät mit einem unterhalb des gekühlten Innenraums bzw. des Korpus 40 verbauten Verflüssiger 12. Zwischen dem Verflüssiger 12 und dem Verdichter 30 befindet sich der Ventilator 45, der eine Luftströmung L erzeugt. Wie dies aus Figur 3 hervorgeht, sind der Verflüssiger 12 und der Verdichter 30 in der Kompressornische unter dem Korpus angeordnet. Die Luft wird von der Vorderseite des Gerätes im Bodenbereich über den Verflüssiger 12 angesaugt und dann über den Verdichter 30 und entlang der Geräterückwand nach oben gefördert.

Die US 4 089 187 A offenbart eine Anordnung gemäß dem Oberbegriff des Anspruchs 1. Die CN 204 535 240 U offenbart ein Kältegerät, bei dem die Geschwindigkeit eines Verflüssigersventilators in Abhängigkeit der Temperatur des Kältemittels gesteuert wird. Weiterer relevanter Stand der Technik ist in CN 1 727 822 A und JP 2014 059109 A zu finden.

Der vorliegenden Erfindung liegt die Aufgabe zugrunde, ein Kühl- und/oder Gefriergerät der eingangs genannten Art dahingehend weiterzubilden, dass dieses gegenüber bekannten Geräten energetische Vorteile aufweist.

Diese Aufgabe wird durch eine Anordnung mit den Merkmalen des Anspruchs 1 gelöst.

Danach ist vorgesehen, dass die Anordnung eine Steuereinheit umfasst, die ausgebildet ist, den Ventilator in Abhängigkeit weingstens eines Parameters der Umgebungsbedingungen anzusteuern.

Die erfindungsgemäße Anordnung berücksichtigt also, dass bei bestimmten Umgebungsbedingungen ein Betrieb mit eingeschaltetem Ventilator energetisch oder anderweitig (z.B. betreffen Geräuschemission) sinnvoll sein kann, während bei anderen, veränderten Umgebungsbedingungen (Umgebungstemperatur, Umgebungsluftfeuchtigkeit, Licht- bzw. Sonneneinstrahlung, Umgebungsdruck, Tageszeit, etc.) ein Betrieb mit ausgeschaltetem Betrieb sinnvoller ist.

Grundsätzlich wirkt sich eine Reduzierung der Verflüssigungstemperatur positiv auf den Energieverbrauch des Gerätes aus. Erfindungsgemäß ist es möglich, das Gerät auch mit ausgeschaltetem Ventilator zu betreiben, was in einer Geräuschminderung sowie in einem verringerten Energieverbrauch aufgrund des ausgeschalteten Ventilators resultiert. Dennoch erfolgt eine Kühlung des Verflüssigers durch natürliche Konvektion, wie dies beispielsweise bei dem aus dem Stand der Technik bekannten Gerät gemäß Figur 2 bekannt ist.

Denkbar ist es, dass die natürliche Konvektionsströmung denselben Verlauf hat, wie in Figur 2 dargestellt, d.h. vorne unten ein Eintritt der Luft erfolgt, diese dann nach oben umgelenkt wird und entlang der Rückseite über den Verflüssiger nach oben strömt. Grundsätzlich sind von der Erfindung auch beliebige andere Strömungswege umfasst.

Vorzugsweise weist der Weg der durch natürliche Konvektion bedingten Luftströmung denselben Verlauf auf, wie der durch den Ventilator bedingte erzwungene Luftstrom, d.h. die dynamische Belüftung.

Eine luftdichte Trennung zwischen Hoch- und Niederdruckseite des Ventilators ist erfindungsgemäß nicht vorhanden, so dass ein Betrieb auch mit ausgeschaltetem Ventilator durch natürliche Konvektion möglich ist.

Durch das Betreiben des Ventilators wird die natürliche Konvektion von Luft auf der Hochdruckseite des Kältemittelkreislaufes unterstützt. Dadurch ergibt sich eine bessere Wärmeübertragung in diesem Bereich und die Verflüssigungstemperatur sinkt. Dies wirkt sich positiv auf den Energieverbrauch des Gerätes aus. Wird der Ventilator nicht betrieben, ergeben sich die gleichen oder annähernd die gleichen Betriebsbedingungen wie bei dem aus dem Stand der Technik bekannten Gerät, z.B. gemäß Figur 2.

Die Luftführungen, die die durch den Ventilator geförderte Luft lenken, können so gestaltet werden, dass diese gleichzeitig als Aufnahme für den Ventilator und/oder für die Tauwasserverdunstungsschale dienen.

Erfindungsgemäß ist der Ventilator derart ausgebildet, dass die durch diesen geförderte Luftmenge veränderbar ist. Denkbar ist es beispielsweise, dass der Ventilator drehzahlgeregelt ist, so dass dessen Leistung bzw. Förderleistung reguliert werden kann. Dies kann beispielsweise bei sich ändernden Umgebungsbedingungen, in Abhängigkeit vom Gerätezustand, dem zulässigen Geräuschpegel oder der gewünschten Geräteeffizienz der Fall sein.

Somit kann der Ventilator mit einer adaptiven Fördermenge betrieben werden. Diese ist abhängig von der Wärmelast, die am Verflüssiger abgegeben werden soll sowie von äußeren Einflüssen, wie wenigstens von der Umgebungstemperatur.

In einer bevorzugten Ausgestaltung der Erfindung ist vorgesehen, dass eine Steuerungs- oder Regelungseinheit vorhanden ist, die ausgebildet ist, die Fördermenge des Ventilators abhängig von der Temperatur des Verflüssigers einzustellen. Dabei ist es insbesondere von Vorteil, wenn die Steuer- oder Regelungseinheit ausgebildet ist, den Ventilator so zu betreiben, dass sich hinsichtlich des Energieverbrauchs des Gerätes ein Optimum ergibt. Wie oben ausgeführt, wirkt sich eine Reduzierung der Verflüssigungstemperatur, die durch eine höhere Förderrate des Ventilators erzeugt werden kann, positiv auf den Energieverbrauch des Gerätes aus. Eine höhere Drehzahl bzw. eine erhöhte Fördermenge des Ventilators ist allerdings mit einer höheren Leistungsaufnahme des Ventilators verbunden. Es existiert somit ein energetisches Optimum hinsichtlich der Leistungsaufnahme und dem Energieverbrauch des Kältemittelkreislaufes, bei dem der niedrigste Energieverbrauch erzielt wird.

Die genannte Steuer- oder Regelungseinheit kann ausgeführt sein, den Ventilator so zu betreiben, dass dieses energetische Optimum bzw. ein bestimmter Bereich um dieses Optimum erreicht wird.

Der Ventilator kann so angeordnet sein, dass er Luft über den Verflüssiger saugt oder bläst. Denkbar ist eine Anordnung, bei der der Ventilator Luft über den Verdichter saugt und über den Verflüssiger bläst.

Denkbar ist es, den Ventilator in der Kompressornische des Gerätes anzuordnen. Dies hat den Vorteil, dass kein eigener Bauraum für den Ventilator benötigt wird.

Die Anordnung weist wenigstens ein Behältnis zur Aufnahme von Tauwasser auf, wobei der Ventilator so angeordnet ist, dass er im Betrieb über das in dem Behältnis befindliche Tauwasser eine Luftströmung erzeugt.

Durch diese Luftströmung wird die Verdunstung von Tauwasser gefördert.

Erfindungsgemäß ist eine Einheit vorgesehen, die den Ventilator in Abhängigkeit der zu verdunstenden Wassermenge betreibt und zwar dahingehend, dass die Förderleistung und/oder -zeit des Ventilators je größer ist, desto mehr Tauwasser verdunstet werden muss. Somit kann der Ventilator beispielsweise so getaktet betrieben werden, dass im Bedarfsfall mehr Tauwasser verdunstet wird. Vorzugsweise kann durch diese Anordnung des Ventilators erreicht werden, dass keine Verdunstungsschalenheizung erforderlich ist.

In einer weiteren Ausgestaltung der Erfindung ist vorgesehen, dass der Kältemittelkreislauf wenigstens einen Verdichter aufweist und dass der Ventilator so angeordnet ist, dass er im Betrieb über den Verdichter eine Luftströmung erzeugt. Somit kann eine Kühlung des Verdichters erreicht werden. Vorzugsweise erfolgt diese Kühlung mittels desselben Ventilators, der einen Luftstrom über den Verflüssiger erzeugt.

Der Ventilator kann zwischen dem Verdichter und dem Verflüssiger angeordnet sein, so dass der Verdichter auf der Saugseite und der Verflüssiger auf der Druckseite des Ventilators angeordnet ist.

Gemäß der Erfindung ist vorgesehen, dass es sich bei dem Gerät um ein Einbaugerät handelt.

In einer weiteren Ausgestaltung der Erfindung weist das Gerät wenigstens eine frontseitige Öffnung auf, durch die die mittels des Ventilators geförderte Luft in den Luftkanal eintritt. Diese Luft strömt dann vorzugsweise unterhalb des gekühlten Innenraums bzw. unterhalb des Korpus entlang und dann nach oben über den Verflüssiger. Die Luft tritt dann oben z.B. an der Rückseite des Gerätes aus. Bevorzugt ist es, wenn der Ventilator bei höchsteffizienten Geräten zum Einsatz kommt, bei hocheffizienten Geräten jedoch nicht. So besteht die Möglichkeit, den gleichen Geräteaufbau für Geräte mit und ohne Ventilator bzw. Ventilatormodul zu verwenden, was Kostenvorteile mit sich bringt.

In einer weiteren bevorzugten Ausgestaltung ist der Ventilator so angeordnet, dass gegenüber bekannten Geräten keine Änderung des Möbelumbaus erforderlich ist. So wird trotz des Einsatz eines Ventilators bzw. eines dynamisch belüfteten Verflüssigers keine Änderung des Möbelumbaus erforderlich. So kann in einer Ausführungsform weiterhin die Luftansaugung frontseitig wie in Figur 2 beschrieben erfolgen.

Weitere Einzelheiten und Vorteile der Erfindung werden anhand eines in der Zeichnung dargestellten Ausführungsbeispiels näher erläutert. Es zeigen:
- Figur 1:: eine schematische Ansicht eines Kühl- und/oder Gefriergerätes als Einbaugerät gemäß der Erfindung,
- Figur 2:: eine schematische Ansicht eines Kühl- und/oder Gefriergerätes als Einbaugerät aus dem Stand der Technik und
- Figur 3:: eine schematische Ansicht eines Kühl- und/oder Gefriergerätes als Standgerät aus dem Stand der Technik.

Figur 1 zeigt ein Kühl- und/oder Gefriergerät gemäß der Erfindung. Dieses Gerät ist als Einbaugerät ausgeführt und weist grundsätzlich denselben Aufbau auf, wie das Gerät gemäß Figur 2, so dass entsprechend Bezug genommen wird. Gleiche oder funktionsgleiche Teile sind mit denselben Bezugszeichen versehen wie in Figur 2.

Der einzige Unterschied zu dem Aufbau gemäß Figur 2 besteht darin, dass in der Kompressornische der Ventilator 50 angeordnet ist.

Dieser ist so angeordnet, dass sich der Verdichter 30 auf der Saugseite des Ventilators 50 und der Verflüssiger 12 auf der Druckseite befindet.

Der Ventilator 50 ist so angeordnet, das die Luft L von dem Verdichter 30 und von der frontseitigen Einlassöffnung E durch den Kanal K1 gefördert wird, die sich ebenfalls auf der Saugseite des Ventilators 50 befinden. Wie dies aus Figur 1 hervorgeht, strömt die Luft somit zunächst entlang unterhalb des Gerätekorpus 10 und wird dann vertikal nach oben umgelenkt. Die Luft durchströmt dann den vertikalen Kanal K2, in dem sich der Verflüssiger 12 befindet und tritt anschließend durch eine Öffnung O aus, die sich oben und hinten am Gerät bzw. im Möbelumbau 20 befindet.

Das Gerät weist eine nicht dargestellte Steuer- oder Regelungseinheit auf, die ausgebildet ist, den Ventilator in Abhängigkeit von der Temperatur des Verflüssigers zu betreiben.

Dabei ist die Steuer- oder Regelungseinheit so ausgebildet, dass zwischen der Verflüssigertemperatur und der variablen Fördermenge des Ventilators ein energetisches Optimum erzielt wird und somit der Energieverbrauch des Gerätes minimiert wird.

Erfindungsgemäß ist die Steuer- oder Regelungseinheit so ausgebildet, dass sie den Ventilator 50 in Abhängigkeit weingstens eines Parameters der Umgebungsbedingungen ansteuert, wobei der oder die Parameter die Umgebungstemperatur umfassen. Als zusätzliche unabhängige Variablen können beispielsweise die Umgebungsluftfeuchtigkeit, die Licht- bzw. Sonneneinstrahlung, der Umgebungsdruck und/oder die Tageszeit in Frage kommen. Mithin ist das Gerät ausgebildet, dass bei einem bestimmten Satz an solchen Bedingungen ein Betrieb mit eingeschaltetem oder mit ausgeschaltetem Ventilator 50 sinnvoller sein kann.

Der Ventilator 50 ist zudem so angeordnet, dass Luft über ein nicht dargestelltes Gefäß zur Aufnahme von Tauwasser geleitet wird, wodurch die Verdunstungsleistung erhöht wird.

Durch die vorliegende Erfindung wird die Verflüssigungstemperatur gesenkt und zudem ein Betrieb ohne laufenden Ventilator ermöglicht, sofern dieser nicht benötigt wird.

Ein weiterer Vorteil der Erfindung besteht darin, dass durch den Einsatz des Ventilators bzw. durch die durch diesen erzeugte Luftströmung der Bildung von Kondensat auf den Außenflächen des Gerätes entgegengewirkt werden kann.

Somit kann auf eine Beheizung der zur Kondensation neigenden Außenflächen durch ein Heizelement verzichtet werden.

Um die Luft in diese Bereiche zu lenken, können Luftleitelemente vorgesehen sein.

## Patentansprüche

1. Anordnung umfassend ein als Einbaugerät ausgestaltetes Kühl- und/oder Gefriergerät sowie einen Möbelumbau (20), in dem das Gerät angeordnet ist, wobei das Kühl- und/oder Gefriergerät wenigstens einen Korpus (10) und wenigstens einen von dem Korpus (10) umgebenen gekühlten Innenraum umfasst, wobei das Gerät zumindest einen Kältemittelkreislauf aufweist, der wenigstens einen Verflüssiger (12) umfasst, der sich an der Rückseite des Korpus (10) in einem Luftkanal (K2) zwischen der Geräterückseite und dem Möbelumbau (20) befindet, und wobei das Gerät wenigstens einen Ventilator (50) aufweist, der so angeordnet ist, dass er im Betrieb eine Luftströmung (L) über den Verflüssiger (12) erzeugt, wobei bei ausgeschaltetem Ventilator (50) eine Luftströmung (L) über den Verflüssiger (12) durch natürliche Konvektion erfolgt, wobei der Ventilator (50) derart ausgebildet ist, dass die durch diesen geförderte Luftmenge (L) veränderbar ist,
**dadurch gekennzeichnet,**
**dass** das Gerät
wenigstens ein Behältnis zur Aufnahme von Tauwasser aufweist, wobei der Ventilator (50) so angeordnet ist, dass er im Betrieb über das in dem Behältnis befindliche Tauwasser eine Luftströmung (L) erzeugt; und
eine Steuereinheit umfasst, die ausgebildet ist, den Ventilator (50) in Abhängigkeit der zu verdunstenden Tauwassermenge und wenigstens eines Parameters der Umgebungsbedingungen anzusteuern, wobei der oder die Parameter die Umgebungstemperatur umfassen.

2. Anordnung nach Anspruch 1, **dadurch gekennzeichnet, dass** eine Steuerungs- oder Regelungseinheit vorhanden ist, die ausgebildet ist, die Fördermenge des Ventilators (50) abhängig von der Temperatur des Verflüssigers (12) einzustellen.

3. Anordnung nach einem der vorhergehenden Ansprüche, **dadurch gekennzeichnet, dass** der Ventilator (50) so angeordnet ist, dass er Luft (L) über den Verflüssiger (12) saugt oder bläst.

4. Anordnung nach einem der vorhergehenden Ansprüche, **dadurch gekennzeichnet, dass** der Kältemittelkreislauf wenigstens einen Verdichter (30) aufweist und dass der Ventilator (50) so angeordnet ist, dass er im Betrieb über den Verdichter (30) eine Luftströmung (L) erzeugt.

5. Anordnung nach Anspruch 4, **dadurch gekennzeichnet, dass** der Ventilator (50) zwischen dem Verdichter (30) und dem Verflüssiger (12) angeordnet ist.

6. Anordnung nach einem der vorhergehenden Ansprüche, **dadurch gekennzeichnet, dass** das Gerät wenigstens eine frontseitige Öffnung (E) aufweist, durch die die mittels des Ventilators (50) geförderte Luft (L) eintritt.

## Claims

1. An arrangement comprising a refrigerator unit and/or a freezer unit designed as a built-in unit and a furniture surround (20) in which the unit is arranged, wherein the refrigerator unit and/or freezer comprises at least one carcass (10) and at least one cooled inner space surrounded by the carcass (10) wherein the unit comprises at least one refrigerant circuit that comprises at least one liquefier (12) that is located at the rear side of the carcass (10) in an air passage (K2) between the rear unit side and the furniture surround (20), and wherein the unit has at least one fan (50) that is arranged such that it generates an airflow (L) over the liquefier (12) in operation, wherein an airflow (L) takes place over the liquefier (12) by natural convection with a switched off fan (50), wherein the fan (50) is configured such that the air amount (L) conveyed by it is variable,
**characterized in that**
the unit
has at least one container for receiving defrost water, with the fan (50) being arranged such that it generates an airflow (L) over the defrost water located in the container in operation; and
comprises a control unit that is configured to control the fan (50) in dependence on the defrost water to be evaporated and on at least one parameter of the environmental conditions, with the parameter or parameters comprising the environmental temperature.

2. An arrangement in accordance with claim 1, **characterized in that** a control or regulation unit is present that is configured to set the conveying amount of the fan (50) in dependence on the temperature of the liquefier (12).

3. An arrangement in accordance with one of the preceding claims, **characterized in that** the fan (50) is arranged such that it sucks or blows air (L) over the liquefier (12).

4. An arrangement in accordance with one of the preceding claims, **characterized in that** the refrigerant circuit has at least one compressor (30); and **in that** the fan (50) is arranged such that it generates an airflow (L) over the compressor (30) in operation.

5. An arrangement in accordance with claim 4, **characterized in that** the fan (50) (50) is arranged between the compressor (30) and the liquefier (12).

6. An arrangement in accordance with one of the preceding claims, **characterized in that** the unit has at least one front-side opening (E) through which the air (L) enters that is conveyed by means of the fan (50).

## Revendications

1. Système comprenant un appareil de réfrigération et/ou de congélation exécuté sous la forme d'un appareil encastrable ainsi qu'un habillage formant meuble (20), dans lequel l'appareil est disposé, l'appareil de réfrigération et/ou de congélation comprenant au moins un corps (10) et au moins un espace intérieur réfrigéré entouré par le corps (10), l'appareil comportant au moins un circuit de fluide frigorigène, qui comprend au moins un condenseur (12), qui se trouve sur le côté arrière du corps (10) dans un canal d'air (K2) entre le côté arrière de l'appareil et l'habillage formant meuble (20), et l'appareil comportant au moins un ventilateur (50), qui est disposé de manière à, en fonctionnement, générer un écoulement d'air (L) sur le condenseur (12), un écoulement d'air (L) sur le condenseur (12) étant effectué par convection naturelle lorsque le ventilateur (50) est arrêté, le ventilateur (50) étant conçu de telle manière que la quantité d'air (L) transportée par celui-ci est modifiable,
**caractérisé en ce que**
l'appareil
comporte au moins un récipient pour recevoir de l'eau de condensation, le ventilateur (50) étant disposé de manière à, en fonctionnement, générer un écoulement d'air (L) sur l'eau de condensation se trouvant dans le récipient ; et
comprend une unité de commande, qui est conçue pour commander le ventilateur (50) en fonction de la quantité d'eau de condensation à évaporer et d'au moins un paramètre des conditions ambiantes, le ou les paramètres comprenant la température ambiante.

2. Système selon la revendication 1, **caractérisé en ce qu'**une unité de commande ou de régulation est présente, laquelle est conçue pour régler le débit du ventilateur (50) en fonction de la température du condenseur (12).

3. Système selon l'une des revendications précédentes, **caractérisé en ce que** le ventilateur (50) est disposé de manière à aspirer ou souffler de l'air (L) sur le condenseur (12).

4. Système selon l'une des revendications précédentes, **caractérisé en ce que** le circuit de fluide frigorigène comporte au moins un compresseur (30) et **en ce que** le ventilateur (50) est disposé de manière à, en fonctionnement, générer un écoulement d'air (L) sur le compresseur (30).

5. Système selon la revendication 4, **caractérisé en ce que** le ventilateur (50) est disposé entre le compresseur (30) et le condenseur (12).

6. Système selon l'une des revendications précédentes, **caractérisé en ce que** l'appareil comporte au moins une ouverture (E) côté frontal, par laquelle l'air (L) transporté au moyen du ventilateur (50) entre.
